# EUROPÄISCHE PATENTSCHRIFT

(11) **EP 2 258 604 B1**
(45) Veröffentlichungstag und Bekanntmachung des Hinweises auf die Patenterteilung: **07.12.2011**
(21) Anmeldenummer: 10176433.0
(22) Anmeldetag: 30.10.2006
(51) Int. Cl.: B62D 3/12, B62D 3/00, H02K 5/10, F16H 57/02, F16N 31/00, F16K 24/00, F01M 13/02

(54) **Vorrichtung zum Freigeben einer Öffnung in einem Gehäuseteil eines Lenkgetriebes**
Device for uncovering an opening in a housing part of a steering gear
Dispositif pour dégager une ouverture dans un élément de boîtier d'un mécanisme de direction

(30) Priorität: 14.02.2006 DE 102006006679
(43) Veröffentlichungstag der Anmeldung: 08.12.2010
(62) Teilanmeldung aus: 06819182.4
(73) Patentinhaber: ZF Lenksysteme GmbH, 73527 Schwäbisch Gmünd (DE)
(72) Erfinder: Bareis, Helmut, 73569 Eschach (DE); Budaker, Martin, 73540 Heubach (DE); Kunz, Reiner, 73577 Birkenlohe (DE); Reuter, Wolfgang Dr., 61197 Florstadt (DE); Hetzel, Oliver, 73550 Waldstetten (DE); Hasenclever, John, 71134 Aidlingen (DE)

(56) Entgegenhaltungen:
- DE-A1- 10 122 993
- DE-A1- 19 917 392
- JP-A- 63 101 179
- JP-A- 63 101 180

## Beschreibung

Die Erfindung betrifft eine Vorrichtung zum Freigeben einer Öffnung in einem Gehäuseteil eines Lenkgetriebes nach der im Oberbegriff von Anspruch 1 näher definierten Art.

Lenkungen für Kraftfahrzeuge sind im allgemeinen im Bereich der Verbindung der Zahnstange mit den Spurstangen mittels Faltenbälgen gegen die Umgebung abgedichtet. Ein Problem dieser meist aus einem elastomeren Wertstoff bestehenden Faltenbälge ist, dass sie beispielsweise durch Tierbisse, Steinschläge, Werkzeuge oder andere Einflüsse beschädigt werden können. Zwar lässt sich dieses Risiko durch den Einsatz hochwertiger Werkstoffe verringern, es kann jedoch nicht vollständig ausgeschlossen werden.

Wenn die Faltenbälge beschädigt werden, so ist die gesamte Lenkung nicht mehr dicht und es kann Feuchtigkeit in das Lenkgetriebe eintreten. Da sich die beschädigte Stelle des Faltenbalgs nur äußerst selten an der tiefsten Stelle des Lenkgetriebes befindet, fließt das eintretende Wasser nicht von selbst ab und sammelt sich innerhalb des Lenkgehäuses. Für die funktionalen Bauteile des Lenkgetriebes ist jedoch insbesondere stehendes Wasser schädlich und kann unter Umständen zu Funktionsstörungen führen.

Die DE 101 22 993 A1 zeigt eine Membran zum Verschließen einer Öffnung in einer Gehäusewand bei einem Gehäuse eines Getriebes. Die Membran weist dabei eine hydrophile Oberfläche auf, so dass ins Getriebeinnere gelangte Wasser in die Umwelt entweichen kann.

Die JP 63 101180 A beschreibt eine Vorrichtung zum Freigeben einer Öffnung. Dabei weist ein Bodenelement eine erste Durchgangsbohrung auf, welche von einem verschiebbaren Ventil verschlossen ist. Das Ventil weist dabei eine zweite Durchgangsbohrung auf, welche in einem Abstand zu der ersten Durchgangsbohrung angeordnet ist, so dass die erste Durchgangsbohrung in einem Ausgangszustand von dem Ventil verschlossen bleibt. Das Ventil steht in Verbindung mit einem wasserabsorbierenden Gummielement. Durch ein Anschwellen des wasserabsorbierenden Gummielements wird das Ventil derart verschoben, dass dessen zweite Durchgangsbohrung mit der ersten Durchgangsbohrung in dem Bodenelement korrespondiert und somit Wasser ausdringen kann. Von Nachteil bei der JP 63 101180 A ist der aufwändige Aufbau.

Zum weiteren Stand der Technik wird ferner auf die JP 63 101179 A verwiesen.

Es ist daher Aufgabe der vorliegenden Erfindung, eine Vorrichtung zum Freigeben einer Öffnung in einem Gehäuseteil eines Lenkgetriebes bei einer Fahrzeuglenkung zu schaffen, welche im Falle eines Flüssigkeitseintritts mit möglichst einfachen Mitteln ein zwangsweises Freigeben einer Öffnung des Lenkgetriebes sicherstellt.

Erfindungsgemäß wird diese Aufgabe durch die in Anspruch 1 genannten Merkmale gelöst.

Die erfindungsgemäße Lösung weist eine verhältnismäßig einfache Konstruktion auf und es ist lediglich das zusätzliche Bauteil erforderlich, welches eine seiner Eigenschaften ändert, wenn es mit einer Flüssigkeit in Kontakt kommt. Dadurch bleibt das Verschlusselement in dem Zustand, in dem keine Flüssigkeit in das Gehäuse des Lenkgetriebes eindringt, verschlossen, wohingegen ein Eindringen von Flüssigkeit in das Lenkgetriebe zu einem sehr raschen Öffnen des Verschlusselements und somit zu einem Freigeben der Öffnung führt. Dadurch kann die sich in dem Lenkgetriebe befindliche Flüssigkeit über die nunmehr freigegebene Öffnung aus dem Lenkgetriebe austreten und es werden weitere Beschädigungen verhindert.

In einer sehr vorteilhaften Weiterbildung der Erfindung kann vorgesehen sein, dass das Bauteil, wenn es mit einer Flüssigkeit in Kontakt kommt, sein Volumen vergrößert. Bei einem derartigen Bauteil kann in einer weiteren Ausgestaltung vorgesehen sein, dass das Bauteil so gegenüber dem Verschlusselement angeordnet ist, dass es bei einer Volumenvergrößerung das Verschlusselement aus der Öffnung drückt. Hierbei handelt es sich um eine besonders einfache Konstruktion, bei welcher die Öffnung dauerhaft freigegeben wird.

Eine andere Lösung bei einem sein Volumen vergrößernden Bauteil kann vorsehen, dass das Bauteil so gegenüber dem Verschlusselement angeordnet ist, dass es bei einer Volumenvergrößerung das Verschlusselement gegen ein das Verschlusselement in seine Geschlossenstellung drückendes Federelement nach innen von der Öffnung abhebt. Der Vorteil dieser Lösung liegt darin, dass, wenn in dem Gehäuse keine Flüssigkeit mehr vorhanden ist, das zusätzliche Bauteil austrocknet und die Federkraft dafür sorgt, dass das Verschlusselement die Öffnung wieder verschließt. Auf diese Weise wird ein Eindringen von Flüssigkeit in das Lenkgetriebe über die Öffnung in dem Lenkgehäuse verhindert.

Nachfolgend sind Ausführungsbeispiele der Erfindung anhand der Zeichnung prinzipmäßig dargestellt.

Es zeigt:
- Fig. 1: eine sehr schematische Darstellung einer Fahrzeuglenkung;
- Fig. 2: eine erste Ausführungsform der erfindungsgemäßen Vorrich- tung; und
- Fig. 3: eine zweite Ausführungsform der erfindungsgemäßen Vorrich- tung.

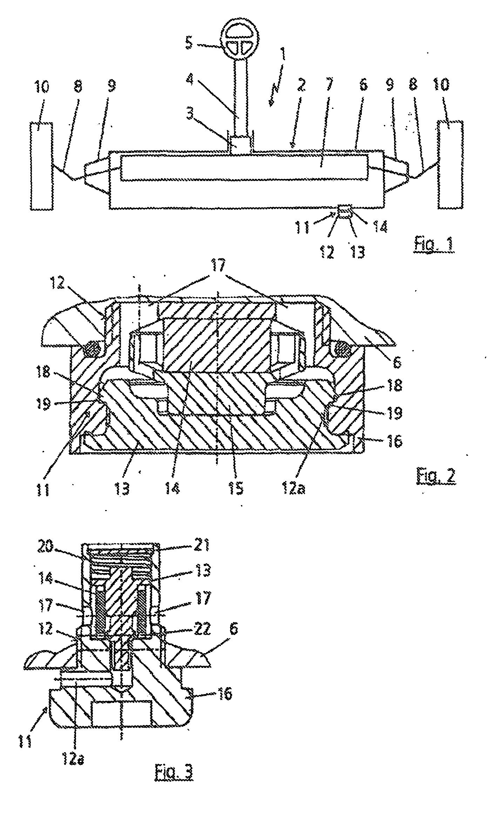

Eine in Fig. 1 sehr schematisch dargestellte Fahrzeuglenkung 1 für ein nicht dargestelltes Kraftfahrzeug weist in an sich bekannter Weise ein Lenkgetriebe 2 auf, auf dessen Eingangsseite sich ein Ritzel 3, eine Lenksäule 4 und eine Lenkhandhabe 5 befinden. Auf der Ausgangsseite des Lenkgetriebes 2 befindet sich eine in einem Gehäuseteil 6 des Lenkgetriebes 2 in Längsrichtung derselben verschiebliche Zahnstange 7. Als Gehäuseteil 6 wird dabei das gesamte Gehäuse, jedoch auch ein einzelnes Bauteil des Gehäuses, wie z. B. ein Gehäusedeckel oder dergleichen, angesehen.

Die Zahnstange 7 ist an ihren beiden Enden mit jeweiligen Spurstangen 8 verbunden. Der Verbindungsbereich zwischen der Zahnstange 7 und den Spurstangen 8 ist von einem jeweiligen Faltenbalg 9 umgeben. In an sich bekannter Weise sind an den Spurstangen 8 jeweilige Räder 10 des Kraftfahrzeugs angebracht.

Da bei einer Beschädigung eines der Faltenbälge 9 eine Flüssigkeit, insbesondere Wasser, in das Lenkgetriebe 2 eintreten kann, ist an dem Gehäuseteil 6 eine Vorrichtung 11 zum Freigeben einer Öffnung 12 in dem Gehäuseteil 6 angeordnet. Die Öffnung 12 ist mit einem Verschlusselement 13 verschlossen, so dass in diesem Bereich keine Flüssigkeit von außen in das Lenkgetriebe 2 eindringen kann. Bei sämtlichen Ausführungsformen der Vorrichtung 11 ist ein Bauteil 14 vorgesehen, welches, wenn es mit einer sich in dem Lenkgetriebe 2 befindlichen Flüssigkeit in Kontakt kommt, wenigstens eine seiner Eigenschaften derart ändert, dass, nach einem Zusammenwirken des Bauteils 14 mit dem Verschlusselement 13, das Verschlusselement 13 die Öffnung 12 freigibt. Nachfolgend werden verschiedene Ausführungsformen der Vorrichtung 11 anhand vergrößerter Schnittdarstellungen erläutert.

Bei der Ausführungsform von Fig. 2 ist das Bauteil 14 gemeinsam mit dem Verschlusselement 13 und einem zwischen dem Bauteil 14 und dem Verschlusselement 13 angeordneten Kolben 15 in einer Hülse 16 untergebracht, welche im vorliegenden Fall in die Öffnung 12 des Gehäuseteils 6 des Lenkgetriebes 2 eingeschraubt wird. Selbstverständlich ist, wie auch in den anderen Ausführungsformen, auch eine andere Art der Verbindung der Hülse 16 mit dem Gehäuseteil 6 möglich. Die Hülse 16 weist Öffnungen 17 auf, über welche die Flüssigkeit zu dem Bauteil 14 gelangen kann. Das Bauteil 14, weiches beispielsweise aus einem hydrophilen Chloroprenkautschuk bestehen kann, vergrößert sein Volumen, wenn es mit der Flüssigkeit, insbesondere Wasser, in Kontakt kommt und drückt so, im vorliegenden Fall über den Kolben 15, das Verschlusselement 13 aus einer sich an die Öffnung 12 anschließenden Öffnung 12a der Hülse 16. Der Kolben 15, der eine kontrollierte Ausdehnung des Bauteils 14 sicherstellt, kann beispielsweise aus Kunststoff oder Metall bestehen.

Um im trockenen Zustand der Vorrichtung 11 ein Erschließen der Öffnung 12a durch das Verschlusselement 13 zu gewährleisten, weist dieses Vorsprünge 18 auf, die in entsprechende Hinterschneidungen 19 in der Hülse 16 eingreifen. Um die Kraft, welche das Bauteil 14 zum Entfernen des Verschlusselements 13 aus der Öffnung 12 aufbringen muss, zu minimieren, kann das Verschlusselement 13 beispielsweise aus einem Elastomer bestehen.

Bei dieser Ausführungsform fallen das Verschlusselement 13, das Bauteil 14 und der Kolben 15 aus der Öffnung 12a und es ist kein Wiederverschließen der Öffnung 12a und somit der Öffnung 12 vorgesehen. Dies ist jedoch im wesentlichen unschädlich, da, wenn einer der Faltenbälge 9 beschädigt ist, auch weiterhin Flüssigkeit in das Lenkgetriebe 2 gelangen kann und auf diese Weise ein Abfließen derselben aus dem Gehäuseteil 6 sichergestellt ist. Bei einer eventuellen Reparatur des beschädigten Faltenbalgs 9 in einer Werkstatt kann auch eine neue Vorrichtung 11 in die Öffnung 12 eingesetzt werden.

Eine weitere Ausführungsform der Vorrichtung 11 ist in Fig. 3 dargestellt. Auch hierbei ist eine Hülse 16 vorgesehen, welche in die Öffnung 12 des Gehäuseteils 6 eingeschraubt oder auf andere Weise befestigt wird. Wiederum kann die sich in dem Lenkgetriebe 2 befindliche Flüssigkeit über die Öffnungen 17 zu dem Bauteil 14 gelangen, welches wiederum so ausgebildet ist, dass es sein Volumen vergrößert, wenn es mit einer Flüssigkeit in Kontakt kommt. Auch diese Ausführungsform des Bauteils 14 kann aus einem hydrophilen Chloroprenkautschuk bestehen. Derartige Werkstoffe weisen eine extreme Volumenänderung auf, wenn sie mit einer Flüssigkeit, insbesondere mit Wasser, in Kontakt kommen.

In der Ausführungsform gemäß Fig. 3 wird jedoch das Verschlusselement 13 mittels eines Federelements 20, welches im vorliegenden Fall mit einer Sicherungsscheibe 21 in der Hülse 16 gehalten ist, in seine Geschlossenstellung gegen die Öffnung 12a in der Hülse 16 gedrückt. Sobald das Bauteil 14 mit der Flüssigkeit in Kontakt kommt, vergrößert es sein Volumen und hebt das Verschlusselement 13 gegen die Kraft des Federelements 20 von der Öffnung 12a ab und gibt diese frei. Hierzu weist das Bauteil 14 an seiner dem Federelement 20 abgewandten Ende Schlitze 22 auf, die es ermöglichen, dass die Flüssigkeit durch das Bauteil 14 zu der Öffnung 12a strömen kann. Wenn die Flüssigkeit das Lenkgetriebe 2 verlassen hat, kann das Bauteil 14 austrocknen und das Verschlusselement 13 kann die Öffnung 12a in der Hülse 16 und damit auch die Öffnung 12 in dem Gehäuseteil 6 durch die von dem Federelement 20 aufgebrachte Kraft wieder verschließen. Das Federelement 20 ist hierbei nur so stark auszulegen, dass das Bauteil 14 in seinem feuchten Zustand das Verschlusselement 13 sicher gegen die Kraft desselben von der Öffnung 12a abheben kann.

Um ein möglichst vollständiges Abfließen der Flüssigkeit aus dem Lenkgetriebe 2 zu gewährleisten, sollte sich die Vorrichtung 11 bei sämtlichen Ausführungsformen an einer möglichst tiefen Stelle des Lenkgetriebes 2 befinden.

## Patentansprüche

1. Vorrichtung zum Freigeben einer Öffnung in einem Gehäuseteil eines Lenkgetriebes bei einer Fahrzeuglenkung, mit einem die Öffnung verschließenden Verschlusselement,
**gekennzeichnet durch**
ein Bauteil (14), das aus einem Material besteht, welches, wenn es mit einer Flüssigkeit in Kontakt kommt, sein Volumen vergrößert, wobei das Bauteil (14) so gegenüber dem Verschlusselement (13) angeordnet ist, dass es bei einer Volumenvergrößerung das Verschlusselement (13) aus der Öffnung (12, 12a) drückt oder das Bauteil (14) so gegenüber dem Verschlusselement (13) angeordnet ist, dass es bei einer Volumenvergrößerung das Verschlusselement (13) gegen ein das Verschlusselement (13) in seine Geschlossenstellung drückendes Federelement (20) nach innen von der Öffnung (12, 12a) abhebt.

## Claims

1. Device for releasing an opening in a housing part of a steering gear in a vehicle steering system, having a closure element which closes the opening, **characterized by** a component (14) which is composed of a material which, when it comes into contact with a liquid, increases its volume, the component (14) being arranged with respect to the closure element (13) in such a way that, in the case of an increase in its volume, it presses the closure element (13) out of the opening (12, 12a), or the component (14) being arranged with respect to the closure element (13) in such a way that, in the case of an increase in its volume, it lifts up the closure element (13) inwardly from the opening (12, 12a) counter to a spring element (20) which presses the closure element (13) into its closed position.

## Revendications

1. Dispositif pour dégager une ouverture dans une partie de boîtier d'un mécanisme de direction dans une direction de véhicule, comprenant un élément de fermeture fermant l'ouverture,
**caractérisé par**
un composant (14), constitué d'un matériau dont le volume augmente lorsqu'il est en contact avec un liquide, le composant (14) étant disposé par rapport à l'élément de fermeture (13) de telle sorte que dans le cas d'une augmentation de volume, il pousse l'élément de fermeture (13) hors de l'ouverture (12, 12a), ou le composant (14) est disposé par rapport à l'élément de fermeture (13) de telle sorte que dans le cas d'une augmentation de volume, il soulève l'élément de fermeture (13) depuis l'ouverture (12, 12a) vers l'intérieur contre un élément de ressort (20) pressant l'élément de fermeture (13) dans sa position fermée.
